# FASCICULE DE BREVET EUROPEEN

(11) **EP 2 310 260 B1**
(45) Date de publication et mention de la délivrance du brevet: **29.07.2015**
(21) Numéro de dépôt: 09784433.6
(22) Date de dépôt: 25.06.2009
(51) Int. Cl.: B64C 1/18, B64C 1/00, B64C 1/06, B64F 5/00

(54) **PROCÉDÉ D'ASSEMBLAGE D'UN PLANCHER DANS UNE STRUCTURE DE COQUE PRÉALABLEMENT CONSTITUÉE D'UN TRONÇON DE FUSELAGE D'AÉRONEF**
VERFAHREN ZUR MONTAGE EINES BODENS IN EINER COCKPITSTRUKTUR, DIE ZUVOR AUS EINEM ABSCHNITT EINES FLUGZEUGRUMPFES HERGESTELLT WURDE
METHOD FOR ASSEMBLING A FLOOR IN A COCKPIT STRUCTURE PREVIOUSLY CONSTRUCTED FROM A SECTION OF AIRCRAFT FUSELAGE

(30) Priorité: 30.06.2008 FR 0854412
(43) Date de publication de la demande: 20.04.2011
(73) Titulaire: Airbus Operations (Société par actions simplifiée), 31060 Toulouse (FR)
(72) Inventeur: SIBONI, Laurent, F-44000 Nantes (FR)
(86) Numéro de dépôt international: PCT/FR2009/051215
(87) Numéro de publication internationale: WO 2010/004172

(56) Documents cités:
- EP-A2- 2 280 865
- WO-A-2006/051235
- WO-A-2007/122246
- WO-A-2008/109711
- DE-A1-102005 045 181
- DE-A1-102006 026 168
- US-A- 4 479 621

## Description

La présente invention est relative au domaine d'assemblage de structures primaires d'un aéronef. Plus particulièrement, l'invention concerne un procédé d'assemblage d'une structure de plancher dans un tronçon de fuselage d'aéronef dont la coque est préalablement constituée.

Un aéronef est réalisé par un assemblage d'éléments qui participent à la formation de la structure primaire.

Un fuselage est un cas particulier de structure primaire comportant une structure de coque 2 et un plancher 4, et est réalisé, par exemple, par l'assemblage de deux ou plusieurs tronçons. Chaque tronçon est généralement constitué, pour la structure de coque 2, de plusieurs panneaux raidis assemblés entre eux pour former un revêtement. Lesdits panneaux comportent une peau 21 sous la forme d'une feuille métallique ou composite mise en forme selon le profil désiré, des raidisseurs longitudinaux, dits lisses 25, fixés à la peau 21 par rivetage, soudure, collage ou co-cuisson selon la nature des matériaux en présence, et des raidisseurs transversaux, dits cadres 23, liés à la peau 21 et aux lisses 25 par rivetage, soudage, collage ou co-cuisson. Les cadres 23 sont positionnés suivant des sections du fuselage sensiblement perpendiculaires à un axe longitudinal X de l'aéronef. Les lisses 25 s'étendent sur les panneaux sensiblement suivant l'axe longitudinal X.

Le plancher 4 est une structure primaire à l'intérieur de la structure de coque 2 du fuselage. Une section de plancher est constituée par un assemblage de traverses 41 et de rails 42, 43. Les traverses 41 sont généralement droites et horizontales, dans un repère aéronef, et s'étendent perpendiculairement à l'axe longitudinal X, suivant un axe Y de l'aéronef. Elles ont pour rôle de drainer les efforts liés à la charge sur le plancher vers la structure de coque du fuselage. Les rails 42, 43 s'étendent suivant l'axe longitudinal X. Ils servent à la fixation des éléments mobiliers, tels que par exemple des sièges, des monuments.

Parmi les rails, des rails 43, dits faux rails car ils ne sont pas utilisés pour fixer des éléments de cabine sur le plancher, sont agencés proche des liaisons cadres 23 - traverses 41 pour renforcer la structure.

Pour réaliser l'assemblage de la structure de coque 2 et du plancher 4, de nombreuses liaisons doivent être réalisées.

Ainsi afin d'assurer une fonction de drainage des efforts (essentiellement le poids d'une charge sur le plancher) vers la structure de coque du fuselage, les traverses 41 sont fixées, aux cadres 23. Dans une section Y donnée du fuselage, la traverse 41 située dans cette section est ainsi fixée au cadre 23 situé dans la même section Y du fuselage, d'une part à une extrémité, et d'autre part, par l'intermédiaire d'une contrefiche en un autre point (52) du cadre.

De plus, pour stabiliser le plancher et absorber l'énergie générée par une décélération suivant l'axe longitudinal X en cas de crash, des bielles anti-crash 6 relient, d'une part en une première extrémité 61 une lisse 25 et d'autre part en une seconde extrémité 62, opposée à la première extrémité 61, le faux rail 43.

Ces liaisons multiples entre le plancher et la structure de coque du fuselage imposent que le plancher soit intégré au fuselage alors que la structure de coque n'est pas encore fermée circonférentiellement.

En effet, le plancher doit constituer une surface de référence plane et parfaitement alignée avec les axes XY de l'aéronef. Compte tenu des grandes dimensions des éléments en présence celui-ci doit donc être préférentiellement pré-assemblé à l'échelle du tronçon et intégré à celui-ci en tant que sous ensemble constitué. L'intégration du plancher traverse par traverse dans la coque de l'aéronef conduirait à des réglages complexes et serait économiquement défavorable.

Par ailleurs, chaque traverse de plancher doit être mise en correspondance avec un cadre afin de lui être fixée. Ce positionnement relatif du plancher pré-assemblé par rapport à la structure de coque est hyperstatique et nécessite une réalisation méthodique tant du plancher que du fuselage. Les traverses et les cadres sont des éléments de structure destinés à drainer des flux d'effort importants et présentent donc chacun une rigidité élevée. Par conséquent, ces éléments ne sont pas aptes à se déformer de manière à s'adapter aux éventuels défauts d'alignement. Il est donc préférable d'assembler le plancher avec une partie inférieure de la structure de coque, dite barque inférieure, avant que ladite barque inférieure ne reçoive une partie supérieure de la structure de coque, dite pavillon supérieur, qui ferme la structure de coque.

Une méthode connue pour assembler un tronçon de fuselage comportant une structure de coque à l'intérieur de laquelle est fixée un plancher consiste à :
- mettre en référence le plancher 4 sur un outillage spécifique,
- positionner des secteurs de cadre puis des panneaux constituant des joues du plancher sur lesdits secteurs de cadre,
- rapporter et fixer la barque inférieure sur les secteurs de cadre, la barque étant elle-même constituée par l'assemblage de panneaux raidis,
- rapporter la partie supérieure, dite pavillon, sur la barque assemblée au plancher et ainsi fermer la structure,
- installer et assembler les contre fiches.

Suivant ce procédé, la structure de coque du fuselage est constituée par des panneaux raidis assemblés en sous ensembles autour du plancher préalablement réalisé. Chaque traverse est liée individuellement en chacune de ses extrémité à la structure de coque par une liaison d'encastrement. On désigne par encastrement une liaison complète apte à transmettre tous les efforts et tous les moments selon les 3 directions de l'espace. Cette liaison d'encastrement stabilise chaque traverse individuellement notamment vis à vis des modes de flexion selon des moments d'axe X ou Z et vis à vis des modes de torsion et de déversement selon des moments d'axe Y.

L'amélioration constante de la performance des aéronefs stimule aujourd'hui la réalisation de plus en plus fréquente d'éléments structuraux (panneaux, cadres, lisses) en matériau composite pour la structure du fuselage de l'aéronef, en raison de l'allègement de masse que ces matériaux composites permettent d'obtenir pour de telles structures.

L'utilisation des matériaux composites pour la fabrication des structures du fuselage permet de réaliser une structure de coque de fuselage d'un seul tenant, fermée circonférentiellement, dit fuselage composite full-barrel. Le plancher et la structure de coque ne peuvent donc plus être assemblés pour constituer un tronçon de fuselage par le procédé actuellement mis en oeuvre et précédemment décrit.

Par ailleurs, la mise en place d'un plancher préalablement assemblé dans la structure de coque fermée circonférentiellement accroît les difficultés liées aux tolérances de fabrication et à l'hyperstatisme de montage, puisque la structure de coque ainsi fermée est extrêmement rigide et qu'il est impossible de compenser les défauts d'alignement par la déformation élastique de la structure.

Il existe donc un besoin pour une structure de fuselage apte à permettre l'assemblage économique d'un plancher préalablement constitué dans une structure de coque fermée circonférentiellement, et permettant de compenser les légers défauts d'alignement entre les traverses de plancher et les cadres.

Il est connu du brevet US 4 479 621 un plancher composite monobloc apte à être inséré dans un tronçon de fuselage constituant une coque fermée circonférentiellement. Ledit plancher est constitué d'un ensemble de plaques monobloc comprenant des raidisseurs longitudinaux s'étendant parallèlement à l'axe X du fuselage enserrés entre deux plaques constituées d'un matériau composite. Un tel plancher présente une largeur plus faible que le diamètre intérieur du fuselage mesuré aux sommets des cadres et peut donc être introduit, plaque par plaque, dans le tronçon constitué. Il est ensuite lié structurellement à la structure de coque par l'intermédiaire de bielles articulées qui permettent la compensation des légers défauts d'alignement entre les points d'attache du plancher est les points de reprise des efforts au niveau des cadres. Cette solution technique de l'art antérieur présente deux inconvénients:
- en cas de dégradation de la structure du plancher en cours d'exploitation de l'aéronef, les réparations sont complexes car elles nécessitent que l'ensemble de la plaque objet de la dégradation soit changée et donc extraite du fuselage
- les mouvements relatifs des pièces au niveau des articulations des liaisons par bielles, combinés au contact avec de l'humidité et des produits corrosifs, particulièrement en zone plancher, entraîne des phénomènes de dégradation desdites articulations par usure de contact et corrosion par frottement

Les autres solutions connues de l'art antérieur, par exemple dans la demande de brevet allemande DE 10 2005 045 181 A ou dans les demandes de brevet européen EP 1 614 625 A et EP 2 030 891 A font appel également à des liaison par bielles et souffrent donc du même risque de dégradation de ces liaisons par frottement et corrosion ou utilisent des éléments plancher monobloc, par exemple dans la demande internationale WO 2008 1097711 A, ou dans le fascicule de brevet européen EP 2 280 865 B1, qui souffrent donc des inconvénients cités supra quant à la possibilité de réparation.

L'invention a pour but de proposer une nouvelle structure de tronçon de fuselage associée à un nouveau procédé d'assemblage d'un tel tronçon, qui permette l'assemblage facile dudit plancher pré-assemblé dans une structure de coque fermée circonférentiellement sans les inconvénients de l'art antérieur.

Un tronçon de fuselage d'aéronef comporte une structure de coque, fermée circonférentiellement, et un plancher solidaire de ladite structure de coque, auquel tronçon est associé un repère tronçon défini par un axe longitudinal X, par un axe latéral Y dans un plan perpendiculaire à l'axe longitudinal X orienté suivant une direction horizontale lorsque le plancher est horizontal et comportant un axe Z dans un plan perpendiculaire à l'axe longitudinal X orienté suivant une direction verticale lorsque le plancher est horizontal. La structure de coque comporte :
- au moins deux cadres positionnés suivant des sections de fuselage sensiblement perpendiculaires à l'axe longitudinal X,
- une peau extérieure prenant appui sur chaque cadre,
chaque cadre définissant une largeur intérieure libre d'obstacle, au niveau du plancher, dit passage libre de cadre I_{Cx}, les passages libres de cadre des cadres successifs étant monotones croissants ou monotones décroissants en fonction de la position en X. Le plancher comporte au moins deux traverses, chaque traverse étant parallèle à l'axe latéral Y et sensiblement dans un plan de cadre.

Suivant l'invention, pour chaque position suivant l'axe longitudinal X déterminée par une section de tronçon comportant un cadre et une traverse, et en tout point de chaque passage libre de cadre, une longueur L_{TX} de la traverse est inférieure au passage libre de cadre I_{Cx}.

Suivant l'invention, chaque traverse, au niveau d'extrémités opposées, est fixée à la structure de coque par un ensemble structural intermédiaire solidaire d'une part de la traverse et d'autre part de la peau extérieure et d'un ou plusieurs cadres et apte à réaliser une liaison individuelle d'encastrement de chaque extrémité de chaque traverse avec la structure de coque.

Ainsi le plancher peut être introduit pré-assemblé dans le tronçon fermé circonferrentiellement et il est possible après assemblage de l'aéronef et au cours d'opérations de réparation de changer individuellement chaque traverse du plancher. Par ailleurs la liaison traverse structure de coque ne souffre pas des inconvénients de l'art antérieur car ne comprenant pas d'articulations.

Suivant l'invention, l'ensemble structural intermédiaire comporte un ou des éléments support, solidaires de tout ou partie des cadres, formant une structure dite corniche. Ladite corniche comporte une âme déterminant une première surface d'appui positionnée en hauteur suivant l'axe Z dans le repère tronçon de sorte que ladite première surface d'appui de l'âme de la corniche présente une largeur I_{b} , selon l'axe latéral Y, sensiblement supérieure à une hauteur h du cadre et détermine une surface de pose sur laquelle sont posées les extrémités des traverses du plancher.

Avantageusement, pour solidariser la corniche au revêtement, la corniche comporte une semelle comportant une surface d'appui affleurant sensiblement une surface d'appui d'une semelle extérieure de chaque cadre et fixée à une face intérieure de la peau extérieure.

Dans un exemple de réalisation, au moins un élément support formant la corniche se prolonge suivant l'axe X sur au moins deux intercadres et comporte au moins une encoche pour le passage de chaque cadre.

Ainsi, ladite corniche participe à la rigidité du fuselage et remplace une ou plusieurs lisses, réduisant d'autant son impact sur la masse globale du tronçon.

De préférence, afin de renforcer l'âme de la corniche, chaque liaison cadre - corniche comporte au moins une cornière, ladite au moins une cornière comportant au moins deux surfaces, une première surface, dite semelle, solidaire à l'âme de la corniche, et une deuxième surface, dite âme, solidaire d'une âme du cadre.

Dans un exemple de réalisation, une cornière est fixée sur une partie de l'âme du cadre et se prolonge sous la corniche, dans une direction opposée à la peau extérieure, au delà du cadre.

De préférence, pour assurer une circulation d'air entre un espace situé au dessus du plancher et un espace situé en dessous du plancher, l'âme de la corniche comporte des ouvertures de communication d'air entre les deux espaces. Ainsi toute surpression différentielle entre l'espace situé en dessous du plancher et celui situé au dessus est évitée.

Dans un exemple de réalisation, pour stabiliser le de plancher, le plancher comporte un ensemble d'éléments stabilisateur formant une structure, dite poutre longitudinale, solidaire de tout ou partie des traverses, au niveau des extrémités desdites traverses et fixée sur la première surface d'appui de l'âme de la corniche.

Dans un mode amélioré de réalisation, au moins une traverse est fixée à chacune de ses extrémités à un cadre par une éclisse pour servir de référence.

L'invention est également relative à un procédé d'assemblage d'un plancher sur une structure de coque d'un tronçon de fuselage d'aéronef qui comporte les étapes de :
- réalisation de la structure de coque comportant les cadres et la peau extérieure,
- réalisation du plancher comportant les traverses, indépendamment de la réalisation de la structure de coque, de sorte que chaque traverse est de longueur inférieure au passage libre de cadre à la position en X de la traverse considérée,
- introduction du plancher dans la structure de coque du coté du cadre présentant le passage libre de cadre le plus large, sensiblement à sa position en Z de destination et jonctionnement structural du plancher et de la structure de coque par un ensemble structural intermédiaire apte à réaliser une liaison individuelle d'encastrement de chaque extrémité de chaque traverse

La description détaillée de l'invention est faite en référence aux figures qui représentent :
Figure 1, déjà citée, un exemple d'un fuselage d'aéronef dont un plancher et une structure de coque sont assemblées suivant un procédé de l'art antérieur,
Figure 2a, un exemple d'une structure de coque avant d'un aéronef,
Figure 2b, un exemple d'un plancher avant d'un aéronef,
Figure 3a, une vue en coupe d'un cadre,
Figure 3b, une vue en coupe d'une traverse,
Figure 4, une vue en coupe d'un tronçon de fuselage d'aéronef au niveau du plancher,
Figure 5, un exemple d'assemblage du plancher sur la structure de coque d'aéronef,
Figure 6, une vue en perspective d'une corniche pour un assemblage du plancher sur la structure de coque suivant un mode de réalisation de l'invention,
Figure 7, une vue en perspective de la corniche au niveau d'un cadre suivant un mode de réalisation de l'invention,
Figure 8, une vue de dessous en perspective du maintien de la corniche par des cornières, suivant un mode de réalisation de l'invention,
Figure 9a, une vue en coupe de l'assemblage du plancher et de la structure de coque par l'intermédiaire de la corniche suivant un mode de réalisation de l'invention,
Figure 9b, une section dans un plan horizontal de la corniche de la figure 9a,
Figure 10, une vue de dessous en perspective d'une poutre longitudinale assemblée à la corniche suivant un mode de réalisation de l'invention.

Un aéronef comporte un fuselage comportant au moins un tronçon comportant chacun une structure de coque 2 sur laquelle est fixée un plancher 4.

La structure de coque 2 et le plancher 4 sont réalisés dans un matériau métallique ou un matériau composite.

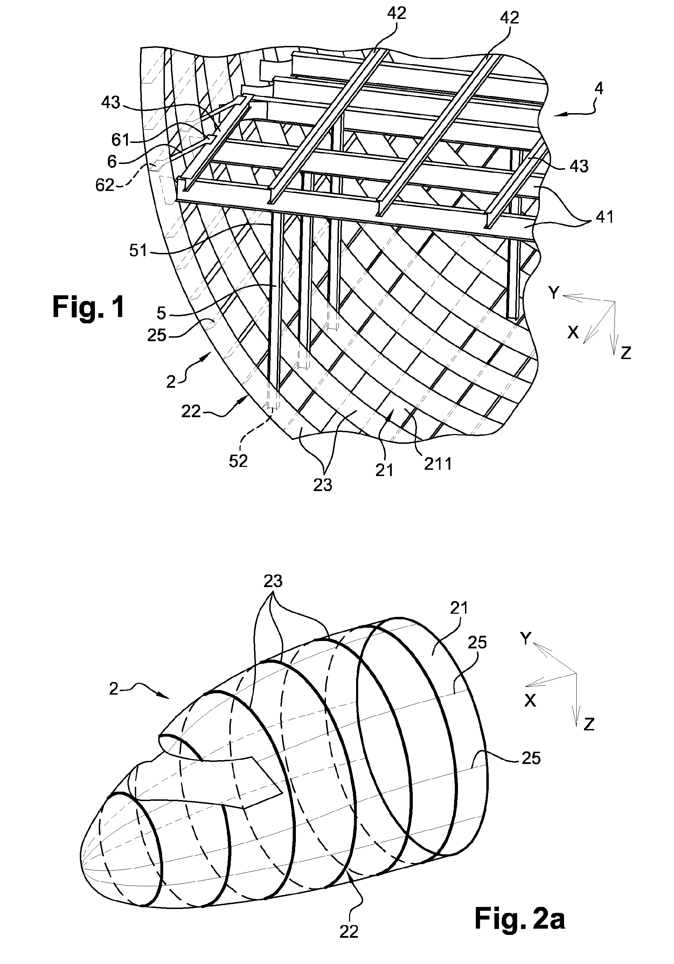

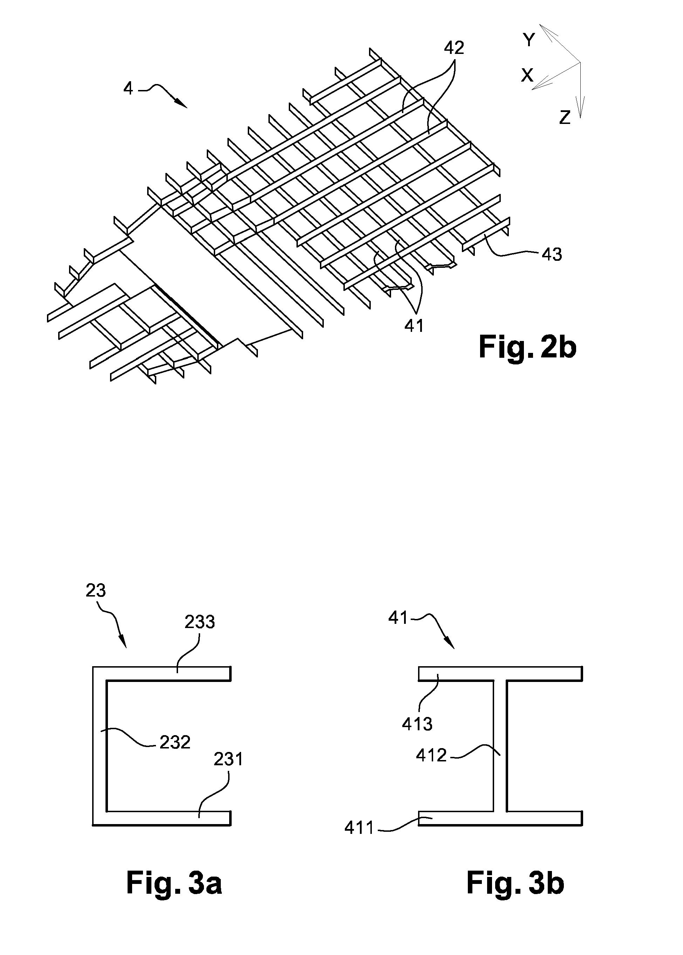

L'exemple de réalisation, en référence aux figures 2a à 10, est décrit de manière détaillée dans le cas d'un tronçon avant d'une structure de coque de fuselage d'aéronef et d'un plancher avant associé sans que ce choix soit limitatif de l'invention. La mise en oeuvre de l'invention peut être adaptée à tout tronçon de structure de coque de fuselage, et à une section de plancher associé, sans se départir du cadre de l'invention.

Dans la description qui va suivre, par convention, on appelle, dans un repère tronçon, X un axe longitudinal de l'aéronef sensiblement parallèle à un axe longitudinal de l'aéronef lorsque ledit tronçon est assemblé dans un fuselage de l'aéronef, Y un axe latéral sensiblement dans un plan perpendiculaire à l'axe longitudinal X et orienté suivant une direction horizontale lorsque le plancher 4 est horizontal, et Z un axe vertical sensiblement dans un plan perpendiculaire à l'axe longitudinal et orienté suivant une direction verticale lorsque le plancher est horizontal, les trois axes étant orthogonaux entre eux.

Le tronçon de fuselage d'aéronef comporte la structure de coque 2, fermée circonférentiellement, comportant elle-même, comme illustré sur la figure 2a, une peau 21 extérieure dont une face intérieure 211 est fixée sur une ossature 22 pour assurer la rigidité nécessaire audit fuselage.

L'ossature 22 de la structure de coque 2 du tronçon de fuselage d'aéronef est formée essentiellement de cadres 23 et de lisses 25. Les lisses 25 s'étendent sensiblement suivant l'axe longitudinal X de l'aéronef. Les cadres 23 sont positionnés suivant des sections de fuselage sensiblement perpendiculaires à l'axe longitudinal X du fuselage 2 et sont répartis sur la longueur du tronçon fuselage d'aéronef suivant un pas plus ou moins régulier. Chacun d'entre eux présente une forme qui correspond sensiblement à la section locale du tronçon de fuselage, par exemple circulaire, au moins localement, comme dans l'exemple de la figure 2a, au niveau d'une section courante.

Les cadres 23 et les traverses 41 de plancher sont par exemple en nombre identique et sont similairement répartis suivant l'axe longitudinal X.

Dans l'exemple de réalisation décrit, comme illustré sur la figure 3a, chaque cadre 23 présente une section transversale en forme de C et comporte une semelle extérieure 231, une âme 232 et une semelle intérieure 233. Les cadres 23 sont essentiellement des cadres qui renforcent la structure de coque et ont une hauteur h.

Des cadres, présentant une section transversale différente, par exemple une section transversale en forme de I, J ou T sont également envisageables.

La semelle extérieure 231 présente une surface d'appui 2311 fixée sur la face intérieure 211 de la peau extérieure 21.

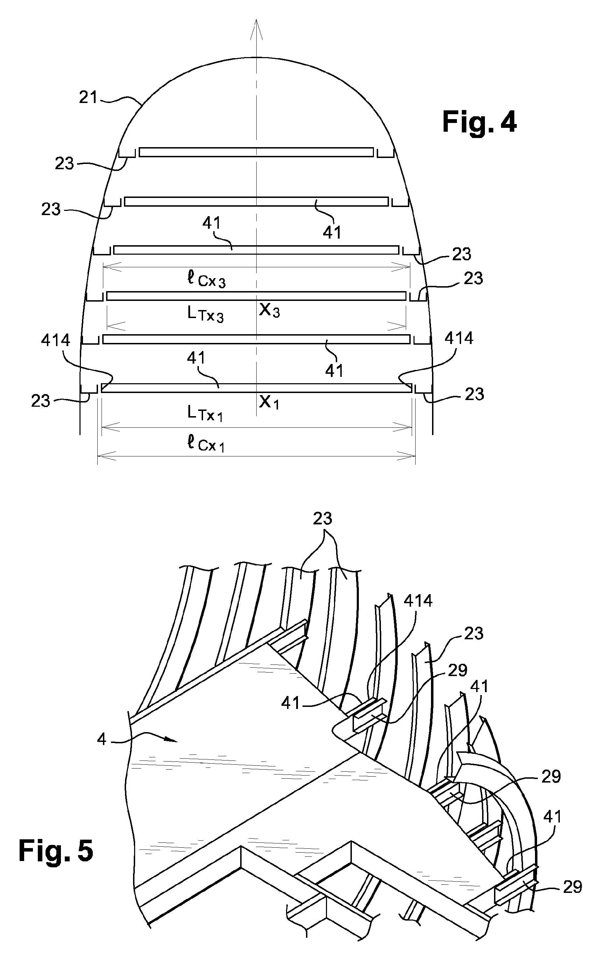

Chaque cadre 23 du tronçon de fuselage, comme illustré sur la figure 4, définit, à la position X considérée et au niveau du plancher 4, une largeur intérieure libre d'obstacle, dit passage libre de cadre I_{Cx}. Par exemple, une largeur intérieure libre d'obstacle I_{Cx1}, à la position X1, une largeur intérieure libre d'obstacle I_{Cx3}, à la position X3.

Les passages libres de cadre I_{Cx} de cadres successifs sont monotones croissants ou monotones décroissants en fonction de la position en X.

Le plancher 4, comme illustré sur la figure 2b, est formé par un assemblage entre une pluralité de traverses 41 s'étendant suivant l'axe latéral Y de l'aéronef et une pluralité de rails 42 et faux rails 43 s'étendant suivant l'axe longitudinal X. Les traverses 41 sont espacées entre elles, en fonction de la résistance structurale recherchée du plancher. Chaque traverse a une longueur L_{Tx} en fonction de la position en X considérée, par exemple une longueur L_{Tx1,} à la position X1, une longueur LT_{x3,} à la position X3.

Dans l'exemple de réalisation décrit, chaque traverse 41 présente une section transversale en forme de I et présente une semelle 411, une âme 412 et une tête 413, comme illustrée sur la figure 3b.

Une traverse est une poutre en appui à ses extrémités opposées et une traverse présentant une section transversale différente, par exemple une section transversale en forme de C, est donc également envisageable.

Suivant l'invention, pour chaque position suivant l'axe longitudinal X déterminée par une section de tronçon comportant un cadre 23 et une traverse 41, la longueur L_{Tx}, entre des extrémités opposées 414 de la traverse considérée est inférieure au passage libre de cadre I_{Cx}.

Pour assembler le plancher 4 à la structure de coque 2 suivant l'invention, chaque traverse 41, au niveau de chacune de ses extrémités 414, est fixée à la structure de coque 2 au moyen d'un ensemble structural intermédiaire 24.

Ledit ensemble structural intermédiaire est solidaire d'une part de la traverse 41 et d'autre part du revêtement 21 et d'un ou plusieurs cadres 23.

Dans un exemple d'assemblage d'un plancher qui ne fait pas partie de l'invention, chaque traverse 41 du plancher 4 est assemblée, à chaque extrémité 414, à un cadre 23 de la structure de coque 2 au moyen d'une éclisse 29, comme illustré sur la figure 5.

Chaque éclisse 29 comporte au moins une surface d'appui 291 prenant appui, d'une part sur l'âme 412 de la traverse 41 et d'autre part sur l'âme 232 du cadre 23. Chaque éclisse 29 s'étend sur une partie suffisante de la longueur de la traverse 41 et de la hauteur h du cadre 23 afin de pouvoir y être fixée et assurer la diffusion homogène des efforts entre la traverse 41 et le cadre 23.

Lorsque, en raison des tolérances de fabrication, les traverses et les cadres ne sont pas, au niveau de leurs âmes, dans le prolongement l'un de l'autre, mais présente un décalage, des cales associées aux éclisses ou des pièces de forme adaptable sont utilisées pour compenser ce décalage. Une cale d'épaisseur sensiblement équivalente au décalage entre la traverse et le cadre est introduite entre la traverse ou le cadre et l'éclisse de telle sorte que ladite éclisse repose sur une surface sensiblement plane sur la traverse et le cadre. La pièce de forme adaptable comporte au moins une surface d'appui, non plane, prenant appui d'une part sur l'âme de la traverse et d'autre part sur l'âme du cadre, et qui reprend le décalage entre la traverse et le cadre sans nécessiter l'ajout et la manipulation d'une pièce supplémentaire, type cale.

Pour renforcer la structure, des faux rails (non représentés) sont agencés proche des liaisons traverse 41 - cadre 23.

Pour stabiliser le plancher et absorber l'énergie en cas de crash, des bielles anticrash (non représentées) relient les faux rails à des lisses (non représentées).

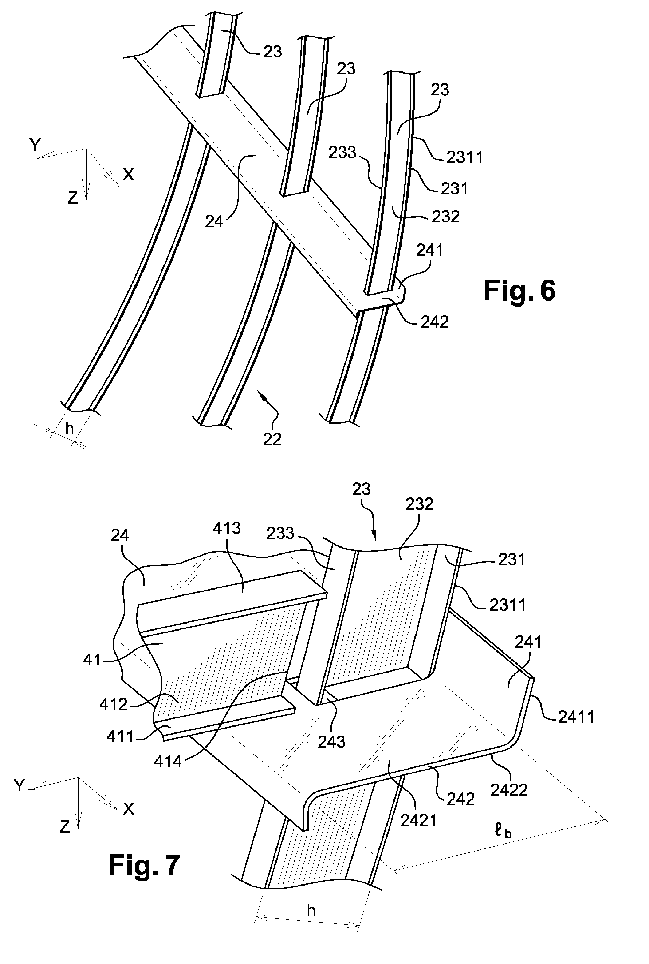

Suivant l'invention, l'ensemble structural intermédiaire comporte un ou des ensembles d'éléments support, solidaires de tout ou partie des cadres 23, formant une structure dite corniche 24, comme illustrée sur la figure 6.

La corniche 24 présente une section droite, dite en L, et comporte une semelle 241 et une âme 242.

L'âme 242 de la corniche 24 est orientée principalement suivant l'axe longitudinal X et comporte une première surface d'appui 2421, positionnée en hauteur suivant l'axe Z de sorte que ladite première surface de l'âme 242 de la corniche 24 détermine une surface de pose sur laquelle se fixent les traverses 41 du plancher 4.

Dans une forme particulière de réalisation, les traverses 41 se trouvent chacune sensiblement en regard d'un cadre de renfort.

Avantageusement, la corniche comporte une semelle 241 comportant une surface d'appui 2411 fixée sur la face intérieure 211 de la peau extérieure 21.

De préférence, la surface d'appui 2411 de la semelle 241 de la corniche 24 est conformée à la géométrie de la peau extérieure 21.

Dans un exemple de réalisation de la corniche, au moins un élément support est positionné entre deux cadres 23 et fixé sur lesdits deux cadres, de sorte que la première surface d'appui 2411 de la semelle 241 de la corniche affleure sensiblement la surface d'appui 2311 de la semelle extérieure 231 de chaque cadre 23.

Dans un autre exemple de réalisation de la corniche, au moins un élément support se prolonge suivant l'axe longitudinal sur au moins deux intercadres et comporte au moins une encoche 243, chaque encoche permettant le passage d'un cadre 23.

Chaque encoche 243 est réalisée dans la semelle 241 de la corniche 24 et se prolonge dans l'âme 242 de ladite corniche de sorte à recevoir un cadre 23 et de sorte qu'une première surface d'appui 2411 de la semelle 241 de la corniche 24 affleure sensiblement la surface d'appui 2311 de la semelle extérieure 231 de chaque cadre 23.

Avantageusement, les encoches 243 présentent des dimensions sensiblement supérieures aux dimensions de la section des cadres 23. Les dimensions des encoches 243, choisies en tenant compte des tolérances de dimensionnement des cadres et des tolérances de positionnement de chaque cadre, évitent les interférences mécaniques entre la corniche 24 et les cadres 23.

De même qu'avec les cadres 23, et afin d'assurer une diffusion plus régulière des efforts entre la corniche 24 et la peau extérieure 21, ladite peau extérieure est fixée à la corniche 24 par tous moyens conventionnels ou par collage, suivant le matériau des éléments à assembler.

Comme illustré sur la figure 7, l'âme 242 de la corniche 24 présente une longueur I_{b} , suivant l'axe latéral Y, sensiblement supérieure à la hauteur h du cadre de sorte à poser et fixer les extrémités 414 des traverses 41 y compris lorsque les traverses sont positionnées sensiblement en regard des cadres.

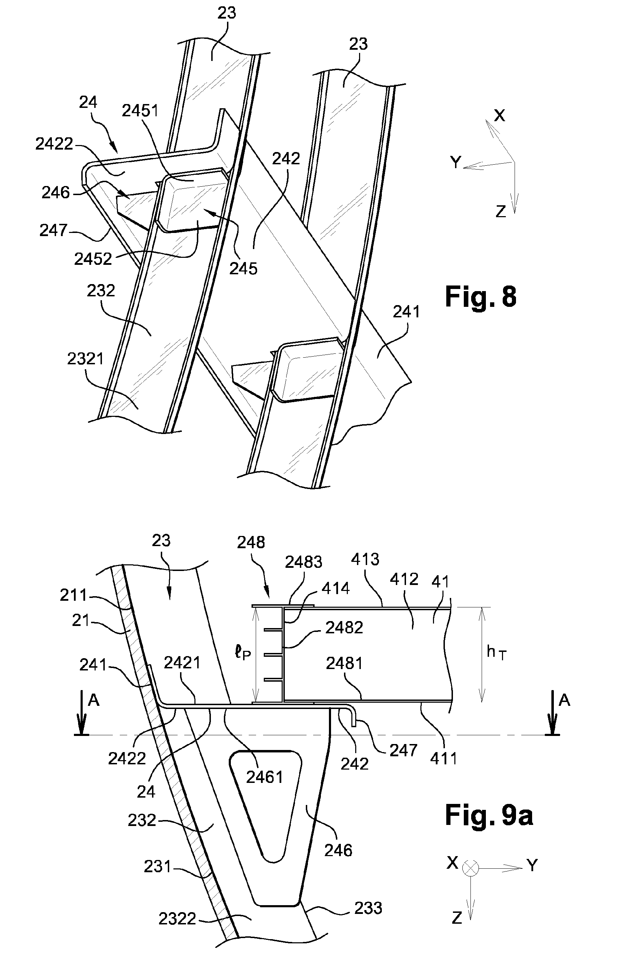

De préférence, l'âme 242 de la corniche 24 est renforcée et maintenue dans un plan sensiblement parallèle au plan du plancher, au niveau de chaque cadre 23, par au moins une cornière 245, 246 comportant au moins deux surfaces, dont une est fixée sur l'âme 232 de chaque cadre 23, comme illustrée sur la figure 8.

Là au moins une cornière 245, 246 est réalisée de sorte à reprendre les efforts en Z liés aux masses positionnées sur le plancher 4.

Dans un exemple de réalisation, comme illustré sur la figure 8, une cornière 245 comporte une première surface, dite semelle 2451 solidaire d'une seconde surface d'appui 2422, opposée à la première surface d'appui 2421 de l'âme 242 de la corniche 24. Ladite cornière comporte une deuxième surface, dite âme 2452, solidaire d'une première surface d'appui 2321 de l'âme 232 d'un cadre 23, dans la zone refermée du cadre en C ou en I.

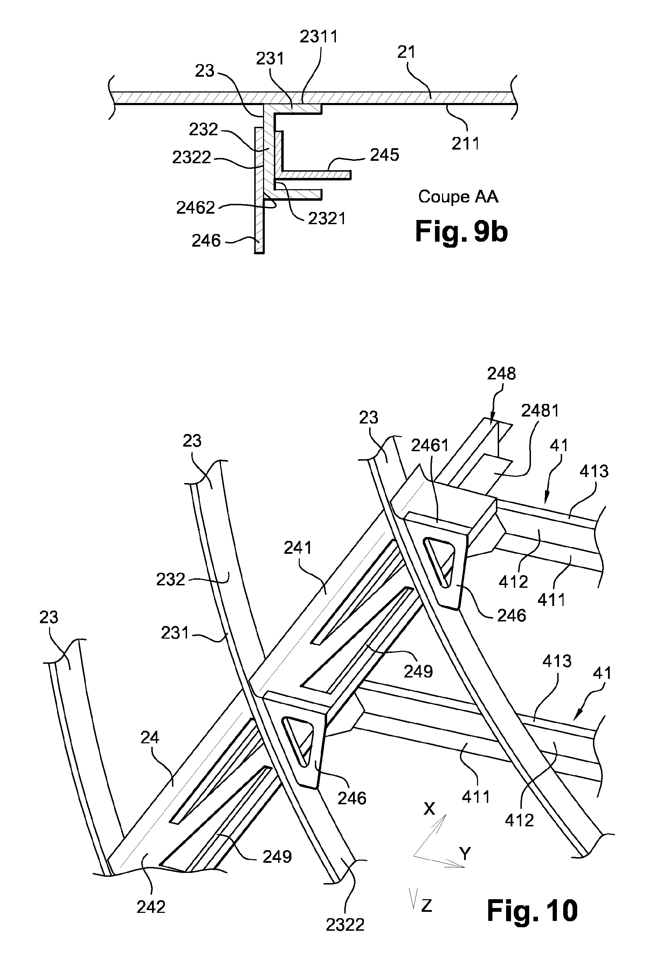

Dans un autre exemple de réalisation, comme illustré sur les figures 9a et 9b, la cornière est formée par une équerre 246 sur chaque cadre 23, de sorte que ladite équerre s'étend, sous la corniche 24, à l'extérieur du cadre 23 dans une direction opposée à la peau extérieure 21. L'équerre 246 comporte une première surface, dite semelle 2461, solidaire de la seconde surface d'appui 2422 de la corniche 24. Ladite équerre comporte une deuxième surface, dite âme 2462, solidaire d'une deuxième surface d'appui 2322, opposée à la première surface d'appui 2321, de l'âme 232 du cadre 23.

De préférence, la corniche 24 comporte, au niveau d'une extrémité de l'âme 242 opposée à la semelle 241, un bord tombé 247 dans une direction opposée aux traverses 41, de sorte à renforcer la stabilité de ladite corniche sans gêner lesdites traverses.

Ainsi, du fait de la continuité de la liaison entre le plancher 4 et l'ossature 22 de la structure de coque 2 du tronçon de fuselage, le recours à des bielles anti-crash n'est plus nécessaire, l'âme 242 sensiblement horizontale de la corniche 24, solidaire de la peau extérieure 21 et du plancher 4, assurant cette fonction.

Dans un exemple de réalisation, comme illustré sur les figures 9a et 10, pour apporter une stabilisation supplémentaire du plancher en cas de crash, le plancher comporte un ensemble d'éléments stabilisateur formant une structure, dite poutre longitudinale 248, qui est solidaire de tout ou partie des traverses 41, au niveau de leurs extrémités 414 et qui est fixée sur la première surface d'appui 2421 de l'âme 242 de la corniche 24. La poutre longitudinale a une fonction sensiblement identique à celle d'un faux rail. La poutre longitudinale 248, présentant une section transversale en forme de I et comportant une semelle 2481, une âme 2482 et une tête 2483, est orientée sensiblement suivant l'axe X et est fixée par ladite semelle sur la surface d'appui 2421 de l'âme 242 de la corniche 24.

L'âme 2482 de la poutre longitudinale 248 a une largeur Ip sensiblement supérieure à une hauteur h_{T} de chaque traverse 41 de sorte que les extrémités 414 desdites traverses s'encastrent contre l'âme 2482 de ladite poutre longitudinale, entre la tête 2483 et la semelle 2481.

Des poutres longitudinales, présentant une section transversale différente, par exemple une section transversale en forme de C, J ou T sont également envisageables.

De préférence, pour tenir compte d'un cas de décompression explosive et donc assurer une circulation d'air entre un espace situé au dessus du plancher, par exemple une cabine, et un espace situé en dessous du plancher, par exemple une soute, la corniche 24 et la poutre longitudinale 248 comportent chacune des ouvertures de communication d'air (représentées sur la figure 10 par la référence 249 pour la corniche et non représentées pour la poutre longitudinale) au niveau de leurs âmes respectives 242, 2482 et entre chaque cadre 23, lesdites ouvertures de communication d'air permettant également un allègement de la structure.

L'invention présente l'avantage de désolidariser les traverses des cadres au moyen de la corniche. En remplaçant la liaison traverses/cadres de l'art antérieur par une liaison traverses/corniche et corniche/cadres suivant l'invention, les tolérances d'assemblage sur le positionnement des cadres 23 sont distinctes des tolérances d'assemblage sur le positionnement des traverses du plancher 4. Des tolérances d'assemblage moins restrictives entre les traverses du plancher et les cadres de la structure de coque permettent ainsi une mise en place plus aisée du plancher dans la structure de coque, et donc une diminution du temps de pose.

Avantageusement, la corniche 24 assure une liaison continue entre les cadres 23, la peau extérieure 21 et le plancher 4, évitant ainsi un effet de matelassage du à la mise en pression de l'appareil.

Avantageusement, outre le support des traverses 41, la corniche 24 permet d'assurer les fonctions d'une ou plusieurs lisses 25 en participant au raidissement de la peau extérieure 21 du fuselage 2, lisses qui peuvent être ainsi supprimées dans le voisinage de ladite corniche.

Dans un exemple de réalisation, la corniche 24 est réalisée dans un matériau métallique, tel que le titane, par exemple par un procédé de formage superplastique, dit SPF.

Dans un autre exemple de réalisation, la corniche 24 est réalisée dans un matériau composite, par exemple par un procédé de formage thermoplastique.

L'invention est décrite, pour ce mode de réalisation, dans le cas d'une corniche 24 présentant une section transversale en forme de L sans que ce choix soit limitatif de l'invention. La mise en oeuvre de l'invention peut être adaptée à des corniches, présentant une section transversale différente, par exemple une section transversale en forme de T sans sortir du cadre de l'invention.

Dans un mode de réalisation, au moins une traverse 41 du plancher 4 est fixée à chacune des extrémités 414 à un cadre 23 par une éclisse 29 pour servir de référence et les traverses 41 restantes sont fixées sur la structure de coque 2 au moyen de la corniche 24.

Suivant l'invention, la structure de coque 2 et le plancher 4 sont réalisés séparément puis assemblés.

Pour assembler le plancher 4 et la structure de coque 2 d'un tronçon de fuselage suivant l'invention, une première étape consiste à réaliser la structure de coque 2.

La structure de coque 2 est réalisée par l'assemblage d'une part des éléments structuraux constitutifs de l'ossature 22, que sont entre autres les cadres 23 et les lisses 25, et d'autre part de la peau extérieure 21.

Les éléments structuraux de l'ossature 22 et la peau extérieure 21 sont assemblés les uns avec les autres par tous moyens conventionnels puis fixés les uns aux autres, par exemple par collage ou rivetage, pour former la structure de coque 2.

Dans une deuxième étape, le plancher 4 est réalisé.

Le plancher 4 est réalisé par l'assemblage des éléments structuraux constitutifs du plancher 4, que sont entre autres les traverses 41, les rails 42 et les faux rails 43.

Le plancher est réalisé de sorte que chaque traverse 41 présente, entre ses extrémités opposées 414 et à la position en X de la traverse, une longueur sensiblement inférieure au passage libre de cadre considéré.

Les éléments structuraux du plancher 4 sont assemblés les uns avec les autres par tous moyens conventionnels puis fixés les uns aux autres pour former la structure de plancher 4.

L'ordre de mise en oeuvre des étapes 1 et 2 n'est pas imposé et, suivant le procédé, les deux étapes peuvent être réalisées dans l'ordre inverse de l'ordre décrit ou réalisées simultanément sans modifier le résultat desdites étapes.

Dans une troisième étape, ultérieure, le plancher 4 est mis en place à l'intérieur de la structure de coque 2 réalisée et fixée sur ladite structure de coque.

Le plancher 4, préalablement réalisé, est introduit dans la structure de coque 2, préalablement réalisée, du coté du cadre présentant le passage libre de cadre le plus large, et sensiblement à sa position en Z de destination. Les extrémités des traverses 41 sont positionnées et fixées sur l'ossature 22 de la structure de coque 2 au moyen d'un ensemble structural intermédiaire 24.

Dans un exemple, les extrémités 414 des traverses 41 du plancher se placent sensiblement chacune en regard d'un cadre de renfort 23 et sont jointes structuralement aux cadres de renfort par des éclisses 29.

Dans un exemple de mise en oeuvre de la troisième étape, les extrémités 414 des traverses 41 se posent chacune sur la corniche 24 fixée aux cadres 23 de la structure de coque 2.

Le procédé, par un positionnement ultérieur du plancher sur une structure de coque préalablement conçue permet de réaliser un pré-équipement dudit plancher avec des harnais électriques.

Ce procédé est applicable sur un tronçon de fuselage réalisé dans un matériau métallique mais il est particulièrement adapté à un tronçon de fuselage réalisé dans un matériau composite où la structure de coque peut être réalisée plus aisément d'un seul tenant, fermée circonférentiellement.

## Revendications

1. Tronçon de fuselage d'aéronef comportant une structure de coque (2), fermée circonférentiellement, et un plancher (4) solidaire de ladite structure de coque, auquel tronçon est associé un repère tronçon défini par un axe longitudinal X, par un axe latéral Y dans un plan perpendiculaire à l'axe longitudinal X orienté suivant une direction horizontale lorsque le plancher est horizontal et comportant un axe Z dans un plan perpendiculaire à l'axe longitudinal X orienté suivant une direction verticale lorsque le plancher est horizontal, ladite structure de coque comportant :
- au moins deux cadres (23) positionnés suivant des sections de fuselage sensiblement perpendiculaires à l'axe longitudinal X,
- une peau extérieure (21) prenant appui sur chaque cadre (23), chaque cadre définissant une largeur intérieure libre d'obstacle, au niveau du plancher, dit passage libre de cadre I_{Cx}, les passages libres de cadre de cadres successifs étant monotones croissants ou monotones décroissants en fonction de la position en X,
le plancher (4) comportant au moins deux traverses, chaque traverse :
- étant parallèle à l'axe latéral Y et sensiblement dans un plan de cadre,
- ayant une longueur L_{Tx} inférieure au passage libre de cadre I_{Cx}, en tout point de chaque passage libre de cadre,
- étant fixée, au niveau d'extrémités opposées (414), à la structure de coque (2) par un ensemble structural intermédiaire (24) fixé d'une part à la traverse (41) et d'autre part à la peau extérieure (21) et à un ou plusieurs cadres (23) et apte à réaliser une liaison individuelle d'encastrement de chaque extrémité de chaque traverse avec la structure de coque,
**caractérisé en ce que** l'ensemble structural intermédiaire comporte un ou des éléments support, solidaires de tout ou partie des cadres (23), formant une structure dite corniche (24), ladite corniche comportant une âme (242) déterminant une première surface d'appui (2421) positionnée verticalement suivant l'axe Z dans le repère tronçon de sorte que ladite première surface d'appui de l'âme (242) de la corniche (24) présente une largeur I_{b} sensiblement supérieure à une hauteur h du cadre (23) et détermine une surface de pose sur laquelle sont posées les extrémités (414) des traverses (41) du plancher (4).

2. Tronçon de fuselage d'aéronef suivant la revendication 1 dans lequel la corniche (24) comporte une semelle (241) comportant une surface d'appui (2411) affleurant sensiblement une surface d'appui (2311) d'une semelle extérieure (231) de chaque cadre (23) et fixée à une face intérieure (211) de la peau extérieure (21).

3. Tronçon de fuselage d'aéronef suivant l'une des revendications précédentes dans lequel au moins un élément support formant la corniche (24) se prolonge suivant l'axe longitudinal X sur au moins deux intercadres et comporte au moins une encoche (243) pour le passage de chaque cadre (23).

4. Tronçon de fuselage d'aéronef suivant l'une des revendications précédentes dans lequel chaque liaison cadre (23) - corniche (24) comporte au moins une cornière (245, 246), ladite au moins une cornière comportant au moins deux surfaces, une première surface, dite semelle (2451, 2461), solidaire à l'âme (242) de la corniche (24), et une deuxième surface, dite âme (2452, 2462), solidaire d'une âme (232) du cadre (23).

5. Tronçon de fuselage d'aéronef suivant la revendication 4 dans lequel une cornière (246) est fixée sur une partie de l'âme (232) du cadre (23) et se prolonge sous la corniche (24), dans une direction opposée à la peau extérieure, au-delà du cadre (23).

6. Tronçon de fuselage d'aéronef suivant l'une des revendications précédentes dans lequel l'âme (242) de la corniche (24) comporte des ouvertures (249) de communication d'air entre un espace situé au-dessus du plancher (4) et un espace situé en dessous du plancher (4).

7. Tronçon de fuselage d'aéronef suivant l'une des revendications 1 à 5 dans lequel le plancher (4) comporte un ensemble d'éléments stabilisateur formant une structure dite poutre longitudinale (248), solidaire de tout ou partie des traverses (41), au niveau des extrémités (414) desdites traverses et fixée sur la première surface d'appui (2421) de l'âme (242) de la corniche (24).

8. -Procédé d'assemblage d'un plancher (4) sur une structure de coque (2) d'un tronçon de fuselage d'aéronef fermé circonférentiellement selon la revendication 1, auquel tronçon est associé un repère tronçon défini par un axe longitudinal X, par un axe latéral Y dans un plan perpendiculaire à l'axe longitudinal X orienté suivant une direction horizontale lorsque le plancher est horizontal et comportant un axe Z dans un plan perpendiculaire à l'axe longitudinal X orienté suivant une direction verticale lorsque le plancher est horizontal, comportant les étapes de :
- réalisation de la structure de coque (2) comportant les cadres (23) et la peau extérieure (21) fixée sur lesdits cadres,
- réalisation du plancher (4) comportant les traverses (41), indépendamment de la réalisation de la structure de coque (2), de sorte que chaque traverse (41) est de longueur inférieure au passage libre de cadre à la position en X de la traverse considérée,
- introduction du plancher (4) dans la structure de coque (2) du côté du cadre présentant le passage libre de cadre le plus large, sensiblement à sa position en Z de destination, et jonctionnement structural du plancher et de la structure de coque par l'ensemble structural intermédiaire (24) apte à réaliser une liaison individuelle d'encastrement de chaque extrémité de chaque traverse avec la structure de coque.

## Patentansprüche

1. Abschnitt eines Flugzeugrumpfes, umfassend eine Cockpitstruktur (2), die in Umfangsrichtung geschlossen ist, und einen Boden (4), der mit der Cockpitstruktur verbunden ist, wobei dem Abschnitt ein Abschnittsbezugspunkt zugeordnet ist, der von einer Längsachse X, einer Seitenachse Y in einer Ebene senkrecht zur Längsachse X definiert ist, die in eine Horizontalrichtung ausgerichtet ist, wenn der Boden horizontal ist, und umfassend eine Achse Z in einer Ebene senkrecht zur Längsachse X, die in eine Vertikalrichtung ausgerichtet ist, wenn der Boden horizontal ist, wobei die Cockpitstruktur umfasst:
- mindestens zwei Rahmen (23), die entlang von Rumpfabschnitten im Wesentlichen senkrecht zur Längsachse X positioniert sind,
- eine Außenhaut (21), die auf jedem Rahmen (23) aufliegt, wobei jeder Rahmen eine freie Hindernisinnenbreite im Bereich des Bodens definiert, freier Rahmendurchgang I_{Cx} genannt, wobei die freien Rahmendurchgänge von aufeinanderfolgenden Rahmen monoton zunehmend oder monoton abnehmend sind, in Abhängigkeit von der Position bei X,
wobei der Boden (4) mindestens zwei Querstreben umfasst, wobei jede Querstrebe:
- zur Seitenachse Y parallel und im Wesentlichen in einer Rahmenebene ist,
- eine Länge L_{Tx} kleiner als der freie Rahmendurchgang L_{Cx} an jedem Punkt jedes freien Rahmendurchgangs hat,
- im Bereich von gegenüberliegenden Enden (414) an der Cockpitstruktur (2) durch eine Zwischenstruktureinheit (24) befestigt ist, die einerseits an der Querstrebe (41) und andererseits an der Außenhaut (21) und an einem o d e r mehreren Rahmen (23) befestigt und geeignet ist, eine individuelle Verbindung durch Einsetzen jedes Endes jeder Querstrebe in die Cockpitstruktur herzustellen,
**dadurch gekennzeichnet, dass** die Zwischenstruktureinheit ein oder mehrere Stützelemente umfasst, die mit der Gesamtheit oder einem Teil der Rahmen (23) verbunden sind und eine so genannte Gesimsstruktur (24) bilden, wobei das Gesims einen Kern (242) umfasst, der eine erste Stützfläche (2421) bestimmt, die vertikal entlang der Achse Z i n dem Abschnittsbezugspunkt positioniert ist, so dass die erste Stützfläche des Kerns (242) des Gesimses (24) eine Breite l_{b} im Wesentlichen größer als eine Höhe h des Rahmens (23) aufweist und eine Stellfläche bestimmt, auf die die Enden (414) der Querstreben (41) des Bodens (4) gestellt werden.

2. Abschnitt eines Flugzeugrumpfes nach Anspruch 1, bei dem das Gesims (24) eine Sohle (241) aufweist, umfassend eine Stützfläche (2411), die im Wesentlichen an einer Stützfläche (2311) einer äußeren Sohle (231) jedes Rahmens (23) anliegt und an einer Innenseite (211) der Außenhaut (21) befestigt ist.

3. Abschnitt eines Flugzeugrumpfes nach einem der vorhergehenden Ansprüche, bei dem sich mindestens ein Stützelement, das das Gesims (24) gebildet, entlang der Längsachse X auf mindestens zwei Zwischenrahmen verlängert und mindestens eine Kerbe (243) für den Durchgang jedes Rahmens (23) umfasst.

4. Abschnitt eines Flugzeugrumpfes nach einem der vorhergehenden Ansprüche, bei dem jede Rahmen (23) -Gesims (2 4) -Verbindung mindestens ein Winkeleisen (245, 246) umfasst, wobei das mindestens eine Winkeleisen mindestens zwei Flächen umfasst, eine erste Fläche, Sohle (2451, 2461) genannt, die mit dem Kern (242) des Gesimses (24) verbunden ist, und eine zweite Fläche, Kern (2452, 2462) genannt, die mit einem Kern (232) des Rahmens (23) verbunden ist.

5. Abschnitt eines Flugzeugrumpfes nach Anspruch 4, bei dem ein Winkeleisen (246) auf einem Teil des Kerns (232) des Rahmens (23) befestigt ist und sich unter dem Gesims (24) in eine zur Außenhaut entgegengesetzte Richtung über den Rahmen (23) hinaus verlängert.

6. Abschnitt eines Flugzeugrumpfes nach einem der vorhergehenden Ansprüche, bei dem der Kern (242) des Gesimses (24) Öffnungen (249) für den Luftaustausch zwischen einem über dem Boden (4) befindlichen Raum und einem unter dem Boden (4) befindlichen Raum umfasst.

7. Abschnitt eines Flugzeugrumpfes nach einem der Ansprüche 1 bis 5, bei dem der Boden (4) eine Gesamtheit von Stabilisierungselementen umfasst, die eine so genannte Längsträgerstruktur (248) bilden, die mit der Gesamtheit oder einem Teil der Querstreben (41) im Bereich der Enden (414) der Querstreben verbunden und auf der ersten Stützfläche (2421) des Kerns (242) des Gesimses (24) befestigt ist.

8. Verfahren zur Montage eines Bodens (4) auf einer Cockpitstruktur (2) eines Abschnitts eines Flugzeugrumpfes, der in Umfangsrichtung geschlossen ist, nach Anspruch 1, wobei dem Abschnitt ein Abschnittsbezugspunkt zugeordnet ist, der von einer Längsachse X, einer Seitenachse Y in einer Ebene senkrecht zur Längsachse X definiert ist, die in eine Horizontalrichtung ausgerichtet ist, wenn der Boden horizontal ist, und umfassend eine Achse Z in einer Ebene senkrecht zur Längsachse X, die in eine Vertikalrichtung ausgerichtet ist, wenn der Boden horizontal ist, umfassend die folgenden Schritte:
- Herstellung der Cockpitstruktur (2), umfassend die Rahmen (23) und die Außenhaut (21), die auf den Rahmen befestigt ist,
- Herstellung des Bodens (4), umfassend die Querstreben (41), unabhängig von der Herstellung der Cockpitstruktur (2), so dass jede Querstrebe (41) eine geringere Länge als der freie Rahmendurchgang in der Position bei X der betreffenden Querstrebe hat,
- Einführung des Bodens (4) in die Cockpitstruktur (2) auf der Seite des Rahmens, die den breitesten freien Rahmendurchgang aufweist, im Wesentlichen in seiner vorgesehenen Position bei Z und strukturelle Verbindung des Bodens und der Cockpitstruktur durch die Zwischenstruktureinheit (24), die geeignet ist, eine individuelle Verbindung durch Einsetzen jedes Endes jeder Querstrebe in die Cockpitstruktur herzustellen.

## Claims

1. Aircraft fuselage section comprising a circumferentially closed shell structure (2), and a floor (4) secured to the said shell structure, with which section is associated a section frame of reference defined by a longitudinal axis X, by a lateral axis Y in a plane perpendicular to the longitudinal axis X oriented in a horizontal direction when the floor is horizontal and comprising an axis Z in a plane perpendicular to the longitudinal axis X oriented in a vertical direction when the floor is horizontal, the said shell structure comprising:
- at least two frames (23) positioned on fuselage cross sections substantially perpendicular to the longitudinal axis X,
- an outer skin (21) bearing against each frame (23),
each frame defining an obstacle-free interior width, at floor level, referred to as the frame-free passage I_{Cx}, the frame-free passages of successive frames increasing monotonously or decreasing monotonously according to the position in the X direction,
the floor (4) comprising at least two crossmembers, each crossmember:
- being parallel to the lateral axis Y and substantially in a frame plane,
- having a length L_{TX} less than the frame-free passage I_{Cx} at any point on each frame-free passage,
- being fixed, at opposite ends (414), to the shell structure (2) by an intermediate structural assembly (24) which is fixed on the one hand to the crossmember (41) and on the other hand to the outer skin (21) and to one or more frames (23) and able to make an individual inbuilt connection of each end of each crossmember with the shell structure,
**characterized in that** the intermediate structural assembly comprises one or more support elements secured to all or some of the frames (23), forming a structure referred to as a cornice structure (24), the said cornice comprising a web (242) determining a first bearing surface (2421) positioned vertically along the axis Z in the section frame of reference so that the said first bearing surface of the web (242) of the cornice (24) has a width I_{b} substantially greater than a height h of the frame (23) and determines a placement surface on which the ends (414) of the crossmembers (41) of the floor (4) are placed.

2. Aircraft fuselage section according to Claim 1, in which the cornice (24) comprises a sole (241) comprising a bearing surface (2411) lying substantially flush with a bearing surface (2311) of an outer sole (231) of each frame (23) and fixed to an interior face (211) of the outer skin (21).

3. Aircraft fuselage section according to one of the preceding claims, in which at least one support element forming the cornice (24) is extended along the longitudinal axis X over at least two interframe distances and comprises at least one cutout (243) for the passage of each frame (23).

4. Aircraft fuselage section according to one of the preceding claims, in which each frame (23) - cornice (24) connection comprises at least one angle bracket (245, 246), the said at least one angle bracket comprising at least two surfaces, a first surface, referred to as the sole (2451, 2461), secured to the web (242) of the cornice (24), and a second surface, referred to as the web (2452, 2462), secured to a web (232) of the frame (23).

5. Aircraft fuselage section according to Claim 4, in which an angle bracket (246) is fixed to part of the web (232) of the frame (23) and extends under the cornice (24) in a direction away from the outer skin, beyond the frame (23).

6. Aircraft fuselage section according to one of the preceding claims, in which the web (242) of the cornice (24) comprises air-communication openings (249) allowing the communication of air between a space situated above the floor (4) and a space situated below the floor (4).

7. Aircraft fuselage section according to one of Claims 1 to 5, in which the floor (4) comprises a set of stabilising elements forming a structure referred to as a longitudinal beam (248), secured to all or some of the crossmembers (41) at the ends (414) of the said crossmembers and fixed to the first bearing surface (2421) of the web (242) of the cornice (24).

8. Method of assembling a floor (4) on a shell structure (2) of a circumferentially closed aircraft fuselage section according to Claim 1, with which section is associated a section frame of reference defined by a longitudinal axis X, a lateral axis Y in a plane perpendicular to the longitudinal axis X oriented in a horizontal direction when the floor is horizontal and comprising an axis Z in a plane perpendicular to the longitudinal axis X oriented in a vertical direction when the floor is horizontal, comprising the steps of:
- creating the shell structure (2) comprising the frames (23) and the outer skin (21) which is fixed to the said frames,
- creating the floor (4) comprising the crossmembers (41), independently of the creation of the shell structure (2) so that each crossmember (41) is of a length less than the frame-free passage at the X-position of the crossmember in question,
- introducing the floor (4) into the shell structure (2) from that side of the frame that has the largest frame-free passage, substantially at its destination Z-position, and structurally joining the floor and the shell structure using the intermediate structural assembly (24) capable of making an individual inset connection of each end of each crossmember with the shell structure.
